# EUROPÄISCHE PATENTSCHRIFT

(11) **EP 3 178 577 B1**
(45) Veröffentlichungstag und Bekanntmachung des Hinweises auf die Patenterteilung: **24.01.2024**
(21) Anmeldenummer: 16202928.4
(22) Anmeldetag: 08.12.2016
(51) Int. Cl.: B09B 3/00, C02F 1/00, C05B 3/00, C05F 7/00, C02F 11/06, C02F 1/36, C02F 1/66, C02F 11/10, C02F 103/20

(54) **VERFAHREN ZUR HERSTELLUNG VON PHOSPHORHALTIGER ASCHE**
METHOD FOR THE PREPARATION OF PHOSPHOROUS-CONTAINING ASH
PROCÉDÉ DESTINE À LA PRODUCTION DE CENDRES CONTENANT DU PHOSPHORE

(30) Priorität: 08.12.2015 EP 15198384
(43) Veröffentlichungstag der Anmeldung: 14.06.2017
(73) Patentinhaber: Labor Dr. Fülling, 42899 Remscheid (DE); Mühlen, Heinz-Jürgen, 44651 Herne (DE)
(72) Erfinder: Mühlen, Heinz-Jürgen, 44651 Herne (DE); Fülling, Rainer, 42855 Remscheid (DE)
(74) Vertreter: Steffan & Kiehne Patentanwälte PartG mbB

(56) Entgegenhaltungen:
- WO-A1-2010/108630
- WO-A1-2015/011275
- ATIENZA-MARTÍNEZ M ET AL: "Phosphorus recovery from sewage sludge char ash", BIOMASS AND BIOENERGY, Bd. 65, 5. Mai 2014 (2014-05-05), Seiten 42-50, XP029026795, ISSN: 0961-9534, DOI: 10.1016/J.BIOMBIOE.2014.03.058

## Beschreibung

Die vorliegende Erfindung betrifft ein Verfahren zur Herstellung von phosphorhaltiger Asche aus wenigstens einem phosphorhaltigen Substrat ausgewählt aus der Gruppe bestehend aus phosphorhaltiger Biomasse umfassend wenigstens die Schritte (a) und (b), nämlich Pyrolyse des wenigstens einen phosphorhaltigen Substrats bei einer Temperatur bis höchstens 800°C ohne Zufuhr von Sauerstoff unter Erhalt eines Pyrolysekokses (Schritt (a)) und Dekarbonisierung des nach Schritt (a) erhaltenen Pyrolysekokses unter Zufuhr von Sauerstoff bei einer Temperatur in einem Bereich von 300°C bis <600°C unter Erhalt einer phosphorhaltigen Asche (Schritt (b)) und die nach diesem Verfahren erhältliche phosphorhaltige Asche sowie eine Verwendung dieser phosphorhaltigen Asche als Düngemittel oder Düngemittelzusatz und/oder zur Herstellung von Düngemitteln.

Als Düngemittel einsetzbare Stoffe und Verbindungen enthalten insbesondere Pflanzennährstoffe wie Calcium, Magnesium, Schwefel und Kalium sowie Phosphor, und stehen in Form von z.B. Dolomit, Gips und Kalisalzen in nahezu unbegrenzter Menge in der Natur zur Verfügung. Auch Stickstoff steht in nahezu unbegrenzter Menge zur Verfügung. Die Umwandlung des elementaren Stickstoffs in eine pflanzenverfügbare Form, die für den Einsatz als Düngemittel erforderlich ist, ist aber sehr energieaufwendig. Hingegen sind die natürlichen Phosphatvorkommen als Quelle für Phosphor begrenzt. Daher ist deren Rückgewinnung geboten und politisch gefordert, um sie wieder in der Pflanzendüngung einsetzen zu können.

Phosphate als Pflanzennährstoffe gelangen in die Natur, insbesondere auf den Acker, primär durch mit dem von Nutztieren im Futter aufgenommenen Phosphor, welcher von diesen zumindest zum Teil wieder ausgeschieden und dann bei nachhaltiger Betriebsführung wieder in pflanzenverfügbarer Form auf den Acker gelangt. Zusätzlich gelangt der mit der Nahrung aufgenommene Phosphor, insbesondere in Form von Phosphaten, über das Abwasser in die Kläranlage, wo er sich im Klärschlamm anreichert. Damit ist der Klärschlamm die wichtigste Sekundärquelle für Phosphor, insbesondere in Form von phosphathaltigen Verbindungen.

Üblicherweise werden Klärschlämme, insbesondere Primär- und Überschussschlämme sowie Belebtschlämme aus industriellen und kommunalen Kläranlagen, die oftmals nur einen Feststoffgehalt im Bereich von 0,5 bis 1,0 Gew. % aufweisen, zunächst auf Feststoffgehalte im Bereich von 3 bis 5 Gew. % eingedickt. Anschließend erfolgt die Ausfaulung in Faultürmen. Nach der Ausfaulung wird das Zentratwasser unter Zugabe von Flockungsmitteln und/oder anderen Hilfsmitteln abgepresst und/oder zentrifugiert und dann zurückgeführt. Die resultierenden Klärschlämme weisen danach Feststoffgehalte im Bereich von 25 bis 35 Gew. % auf. Diese Klärschlämme wurden lange Zeit in der Landwirtschaft als Düngemittel verwendet. Seit geraumer Zeit sinkt die Akzeptanz für diesen Verwertungsweg jedoch progressiv, da die hiermit verbundenen Kreisläufe in Verdacht stehen, zu einer unerwünschten Aufkonzentrierung bestimmter Substanzen zu führen wie beispielsweise perfluorierter Tenside (PFT). Zudem erfordern diese Kreisläufe vergleichsweise hohe Transport- und Einarbeitungskosten (Aufbringen auf den Acker und Unterpflügen etc.), weswegen auch deshalb intensiv nach alternativen Verwertungsverfahren gesucht wird, die zum einen den Düngewert des Klärschlamms erhalten und zum anderen den Energieinhalt des Klärschlamms nutzbar machen können.

Eine Vorgehensweise für die Behandlung von Klärschlamm ist dessen Trocknung. Problematisch daran ist jedoch oftmals, dass der Klärschlamm üblicherweise neben Fasern wie Cellulosefasern und Mineralien eine gelartige Substanz aus insbesondere Glykosaminoglykanen (GAG) und/oder Mucopolysacchariden enthält, die Wasser sehr stark bindet und während des Trocknungsprozesses eine Leimphase bildet, die den Trocknungsprozess oftmals behindert bzw. erschwert. Auf Grund dieser Schwierigkeiten wird der Klärschlamm oftmals entweder mit anderen Brennstoffen oder mit bereits getrocknetem Klärschlamm vor der Trocknung gemischt oder es wird der Klärschlamm mittels eines Extruders in kleine tonnenförmige Körper gepresst und diese direkt auf einen Bandtrockner aufgegeben. Diese Verfahren sind jedoch kostenintensiv und führen nur zu einem getrockneten Produkt, das verbrannt, vergast oder pyrolysiert werden kann. Die ersten beiden Verfahren benötigen so hohe Temperaturen, dass Sinterprozesse parallel ablaufen und die Düngerqualitäten des Klärschlamms vernichten bzw. signifikant verringern. Die Pyrolyse führt zu einem teerhaltigen Pyrolysegas und zu einem vergleichsweise inerten Koks führt, der den darin enthaltenen Phosphor in der Kohlenstoffmatrix des Kokses für eine zu lange Dauer bindet, so dass der Phosphor in einer Wachstumsperiode von ca. 6 bis 8 Wochen nicht in ausreichenden Maße freigesetzt wird und daher eine nicht genügende Menge an Phosphor in pflanzenverfügbarer Form innerhalb dieser Dauer zur Verfügung gestellt werden kann.

Wie vorstehend erwähnt ist es grundsätzlich möglich, den aufkonzentrierten Klärschlamm vor dessen Einsatz ohne Trocknung zu verbrennen (Nassverbrennung), jedoch ist dann die ebenfalls angestrebte Energiegewinnung wegen der hohen Feuchtegehalte der Schlämme nur sehr gering und eine solche Verfahrensführung daher nachteilig. Darüber hinaus besteht bei der Nassverbrennung bei den hierbei notwendigen hohen Verbrennungstemperaturen das Problem, dass es zu einer Versinterung der dabei entstehenden Aschen und insbesondere der darin enthaltenen Phosphorverbindungen kommen kann, so dass der Phosphor als Folge dessen nicht mehr in ausreichender Menge in pflanzenverfügbarer Form erhalten wird, um solche Verbrennungsprodukte als Düngemittel nutzbar machen zu können.

Aus der EP 1 134 206 A2 ist ein solches Verfahren zur Verbrennung von Klärschlamm, Tierkörpern, Gülle oder anderen Rückständen organischen Ursprungs unter Erhalt von Aschen bekannt, die gemäß der Lehre der EP 1 134 206 A2 als phosphathaltige Düngemittel einsetzbar sind. Jedoch lehrt die EP 1 134 206 A2 im Einklang mit den vorstehend beschriebenen Nachteilen einer Nassverbrennung, dass gemäß dem darin beschriebenen Verfahren phosphathaltige Aschen erhalten werden können, deren Anteil an Phosphat in pflanzenverfügbarer Form bei höchstens 60% liegt. Dieser Anteil ist jedoch zu gering für eine effiziente Nutzung dieser Aschen als Düngemittel, weshalb sich dieses Verfahren in der Praxis als nachteilig erwiesen hat.

Auch aus der DE 10 2010 034 042 A1 ist ein Verfahren zur Herstellung von Phosphat-Düngemitteln aus regenerativen Wertstoffen bekannt, das eine Monoverbrennung von kommunalen Klärschlämmen zur Herstellung von Aschen vorsieht. Das aus der DE 10 2010 034 042 A1 bekannte Verfahren versucht die in den beiden vorstehenden Absätzen genannten Nachteile dadurch auszuräumen, dass die Aschen zwingend mit einer Mineralsäure wie insbesondere Phosphorsäure aufgeschlossen werden, um eine bessere Nutzung dieser Aschen als Düngemittel erzielen zu können. Ein solcher Aufschluss mit einer Mineralsäure wie Phosphorsäure als ein weiterer Verfahrensschritt ist jedoch insbesondere deshalb nachteilig, da hierfür zwingend säurebeständige Apparaturen eingesetzt werden müssen, was vergleichsweise aufwendig ist. Zudem ist insbesondere bei Aufschluss mit Phosphorsäure nachteilig, dass hohe Kosten entstehen, da die Phosphorsäure wesentlich teurer ist als die als Düngemittel eingesetzten Phosphatsalze.

DE 26 01 676 A1 offenbart ebenfalls ein Verfahren zur Verbrennung von Phosphor enthaltenden Abfallstoffen einschließlich eines Erhitzens der dabei entstehenden Aschen auf Temperaturen bis 1 300°C. Bei derart hohen Verbrennungstemperaturen können jedoch keine Aschen erhalten werden, die eine ausreichende Menge an Phosphor in pflanzenverfügbarer Form enthalten und deshalb als effizientes Düngemittel eingesetzt werden könnten. Zudem ist das in DE 26 01 676 A1 offenbarte Verfahren nachteilig, da der Verfahrensschritt des Erhitzens so hohe Temperaturen erfordert, dass dieses Verfahren aus energetischen und damit ökonomischen Gründen nachteilig ist.

Ein reines Pyrolyseverfahren zur Erzeugung thermischer Energie aus Biomasse wird in der WO 2007/033642 A1 offenbart. Wie vorstehend erwähnt führt eine solche Pyrolyse jedoch zu einem vergleichsweise inerten Koks, welches darin enthaltenen Phosphor zwar in grundsätzlich pflanzenverfügbarer Form enthält, dieser jedoch gleichzeitig aufgrund der Einbindung in die Kohlenstoffmatrix des Kokses darin für sehr lange Zeit fixiert ist, so dass dieser den Pflanzen nicht direkt zugänglich ist, wenn das mittels dieses Verfahrens hergestellte Pyrolyseprodukt als Düngemittel eingesetzt wird. Weiterhin nachteilig an diesem Verfahren ist, dass dieses sehr energieineffizient ist, da für die Durchführung der Pyrolyse hohe Mengen an Energie benötigt werden. Zudem kann mit dem ebenfalls bei diesem Verfahren entstehenden Pyrolysegas keine oder in nur geringem Maße elektrische Energie erzeugt werden, da die bei der Verbrennung dieses Gases erzeugte Energie für die Durchführung der Pyrolyse eingesetzt wird.

Aus der WO 01/21730 A1 ist ein Verfahren zur Vergasung von organischen Stoffen und Stoffgemischen mittels Pyrolyse und anschließender Verbrennung bekannt. Diese Druckschrift enthält jedoch keine Hinweise auf irgendeine potentielle Gegenwart oder Relevanz irgendwelcher Mengen an Phosphor in den gemäß diesem Verfahren erhaltenen festen Vergasungsprodukten, geschweige denn auf irgendeine potentielle Verwendung dieser Produkte als Düngemittel. Dies ist völlig in Einklang mit der Lehre der WO 01/21730 A1, die offenbart, dass die darin beschriebene Verbrennung bei hohen Temperaturen >1 000°C zu erfolgen hat, bei denen keine Produkte erhalten werden können, die eine ausreichende Menge an Phosphor in pflanzenverfügbarer Form enthalten und deshalb als Düngemittel eingesetzt werden könnten und bei denen zudem Sinterprozesse parallel ablaufen, welche die Düngerqualitäten des Klärschlamms vernichten bzw. signifikant verringern.

Aus der WO 2010/108630 A1 ist ein Verfahren zur Eliminierung von Schadstoffen aus Klärschlamm und ein Verfahren zur Herstellung von Phosphaten und phosphathaltigen Verbindungen bekannt. Ein Artikel von M. Atienza-Martinez et al. (Biomass & Bioenergy 2014, 65, Seiten 42-50; XP029026795) offenbart ein Verfahren zur Phosphor-Rückgewinnung aus der Asche von verbranntem Klärschlamm.

Es besteht daher ein Bedarf an einem verbesserten Verfahren zur Herstellung von phosphorhaltigen Düngemitteln, welches es ermöglicht, phosphorhaltige Biomasse wie insbesondere Klärschlamm, derart zu verwerten und weiterzuverarbeiten, dass der darin enthaltene Phosphor, insbesondere in Form von darin enthaltenem Phosphat, möglichst energieeffizient und möglichst vollständig in Form eines als Düngemittel effizient nutzbaren Produktes zugänglich gemacht wird, das eine möglichst hohe Menge an Phosphor, insbesondere Phosphat, in pflanzenverfügbarer Form enthält, welches den Pflanzen bei Einsatz als Düngemittel direkt und unmittelbar zugänglich ist bzw. in ausreichendem Maße freigesetzt werden kann.

Eine Aufgabe der vorliegenden Erfindung ist es daher, ein Verfahren zur Herstellung von phosphorhaltigen Düngemitteln aus phosphorhaltiger Biomasse als phosphorhaltiges Substrat wie insbesondere Klärschlamm, Rückständen aus Biogasanlagen und Gülle zur Verfügung zu stellen, welches Vorteile gegenüber den aus dem Stand der Technik bekannten Verfahren aufweist und/oder die Nachteile dieser Verfahren nicht oder zumindest in geringerem Maße aufweist. Insbesondere ist es eine Aufgabe der vorliegenden Erfindung, ein solches Verfahren zur Verfügung zu stellen, welches es ermöglicht, effiziente phosphorhaltige Düngemittel aus solcher phosphorhaltiger Biomasse zu gewinnen, und welches möglichst ökonomisch durchgeführt werden kann, insbesondere im Hinblick auf die Energieeffizienz des Verfahrens.

Diese Aufgabe wird gelöst durch den in den Patentansprüchen beanspruchten Gegenstand und den in der vorliegenden Beschreibung nachstehend offenbarten bevorzugten Ausführungsformen dieses Gegenstands.

Ein erster Gegenstand der vorliegenden Erfindung ist daher ein Verfahren zur Herstellung von phosphorhaltiger Asche gemäß Anspruch 1.

Ein weiterer Gegenstand der vorliegenden Erfindung ist phosphorhaltige Asche, welche erhältlich ist nach dem erfindungsgemäßen Verfahren, d.h. gemäß dem ersten Gegenstand der vorliegenden Erfindung und die im Zusammenhang mit diesem ersten Gegenstand in der Beschreibung offenbarten bevorzugten Ausführungsformen.

Ein weiterer Gegenstand der vorliegenden Erfindung ist eine Verwendung der erfindungsgemäßen phosphorhaltigen Asche als Düngemittel oder Düngemittelzusatz und/oder zur Herstellung von Düngemitteln, d.h. eine Verwendung des zweiten Gegenstands der vorliegenden Erfindung und die im Zusammenhang mit diesem zweiten Gegenstand in der Beschreibung offenbarten bevorzugten Ausführungsformen. Ein weiterer Gegenstand der vorliegenden Erfindung ist ein Düngemittel umfassend wenigstens die erfindungsgemäße phosphorhaltige Asche.

Es wurde überraschend gefunden, dass es das erfindungsgemäße Verfahren ermöglicht, phosphorhaltige Asche aus phosphorhaltiger Biomasse in einem ökonomisch sehr effizienten Verfahren zu gewinnen, insbesondere da die bei der Dekarbonisierung gemäß Schritt (b) des Verfahrens gewonnene Wärme bzw. Energie in elektrischen Strom oder/und nutzbare Wärme überführt wird und insbesondere zur Durchführung der Pyrolyse gemäß Schritt (a) des Verfahrens eingesetzt werden kann. Die dann wiederum bei Durchführung der Pyrolyse gemäß Schritt (a) entstehenden Gase oder zumindest Teile davon können einer thermischen Nutzung zugeführt werden, mit dem Ziel ebenfalls entweder Wärme und/oder elektrischen Strom zu erzeugen, die dann ebenfalls wiederum zur Durchführung der Pyrolyse gemäß Schritt (a) genutzt werden können.

Es wurde ferner überraschend gefunden, dass es das erfindungsgemäße Verfahren ermöglicht, phosphorhaltige Asche aus phosphorhaltiger Biomasse zu gewinnen, welche eine hohe Menge an Phosphor in pflanzenverfügbarer Form enthält. Insbesondere kann durch das erfindungsgemäße Verfahren phosphorhaltige Asche erhalten werden, welche eine Menge von wenigstens 65 Gew.-% oder wenigstens 75 Gew.-% oder wenigstens 85 Gew.-%, jeweils bezogen auf die Gesamtmenge an Phosphor, die in der nach Durchführung von Schritt (b) erhaltenen phosphorhaltigen Asche enthalten ist, in pflanzenverfügbarer Form enthält.

Zudem wurde überraschend gefunden, dass es das erfindungsgemäße Verfahren ermöglicht, phosphorhaltige Asche aus phosphorhaltiger Biomasse zu gewinnen, welche eine hohe Menge an Phosphor in pflanzenverfügbarer Form enthält, die den Pflanzen bei Einsatz als Düngemittel in ausreichender Zeit zugänglich ist, insbesondere innerhalb einer Wachstumsperiode von 6 bis 8 Wochen nach Einsatz des Düngemittels.

Ferner wurde überraschend gefunden, dass es das erfindungsgemäße Verfahren ermöglicht, phosphorhaltige Asche aus phosphorhaltiger Biomasse zu gewinnen, welche eine hohe Menge an Phosphor in pflanzenverfügbarer Form enthält, jedoch ohne dabei einen nachteiligen Aufschluss der Asche mit einer Mineralsäure wie Phosphorsäure durchführen zu müssen.

### Substrat

Als Substrat wird für die Durchführung von Schritt (a) des erfindungsgemäßen Verfahrens wenigstens ein phosphorhaltiges Substrat ausgewählt aus der Gruppe bestehend aus phosphorhaltiger Biomasse eingesetzt.

Das erfindungsgemäß eingesetzte phosphorhaltige Substrat ist vorzugsweise ein organisches Substrat und enthält daher insbesondere Kohlenstoff und/oder basiert auf Kohlenstoff. Das erfindungsgemäß eingesetzte Substrat ist phosphorhaltig, d.h. enthält Phosphor in Form von phosphorhaltigen Verbindungen und/oder phosphorhaltigen Komponenten wie beispielsweise Phosphaten einschließlich Mono- und Dihydrogenphosphaten, oligomeren und polymeren Phosphaten.

Das phosphorhaltige Substrat ist ausgewählt aus der Gruppe bestehend aus phosphorhaltiger Biomasse.

Der Begriff der Biomasse ist dem Fachmann dabei bekannt und definiert in Artikel 2 der Richtlinie 2009/28/EG des Europäischen Parlaments und des Rats vom 23. April 2009 zur Förderung der Nutzung von Energie aus erneuerbaren Quellen. Als Biomasse wird gemäß dieser Definition der biologisch abbaubare Teil von Erzeugnissen, Abfällen und Reststoffen der Landwirtschaft mit biologischem Ursprung (einschließlich pflanzlicher und tierischer Stoffe), der Forstwirtschaft und damit verbundener Wirtschaftszweige einschließlich der Fischerei und der Aquakultur sowie der biologisch abbaubare Teil von Abfällen aus Industrie und Haushalten bezeichnet.

Vorzugsweise ist die erfindungsgemäß eingesetzte Biomasse ausgewählt aus der Gruppe bestehend aus Gras, Mais, Grassilage, Maissilage, Dünnschlempe, Futterrüben, Ganzpflanzensilagen, Grünschnitt, Industrieobst, Jauche, Presskuchen, Rapsextraktionsschrot, Rapskuchen, Rübenblattsilage, Zuckerrüben, Gülle, Bioabfällen und Klärschlamm, vorzugsweise Rohschlamm, insbesondere aus Abwasser oder Abwässern oder aus Rückständen von Biogasanlagen stammender Klärschlamm, vorzugsweise Rohschlamm, sowie Gärreste aus Biogasanlagen. Unter "Gülle" wird im Sinne dieser Erfindung vorzugsweise Dünger wie Wirtschaftsdünger, besonders bevorzugt natürlich anfallender Dünger wie Wirtschaftsdünger verstanden, der vorzugsweise wenigstens Urin und Kot landwirtschaftlicher Nutztiere beinhaltet. Abhängig von darin enthaltenen Mengen an Einstreu umfasst der Begriff "Gülle" insbesondere Dick- oder Dünngülle, Schwemmmist und/oder Flüssigmist.

Insbesondere bevorzugt wird im Rahmen des erfindungsgemäßen Verfahrens als wenigstens ein phosphorhaltiges Substrat phosphorhaltige Biomasse eingesetzt, die ausgewählt ist aus der Gruppe bestehend aus Klärschlamm, insbesondere Rohschlamm, Gülle, Rückständen aus Biogasanlagen (sogenannte Gärreste) und Mischungen davon.

Die erfindungsgemäß eingesetzte phosphorhaltige Biomasse umfasst dabei vorzugsweise faserhaltiges Material und/oder pflanzliches Material, das jeweils noch nicht oder zumindest nicht vollständig vergoren ist oder welches schwierig zu vergären ist. Vorzugsweise umfasst dieses Material Cellulose und/oder Lignocellulose.

Vorzugsweise wird die erfindungsgemäß eingesetzte phosphorhaltige Biomasse jeweils in getrockneter Form eingesetzt.

Vorzugsweise weist das eingesetzte phosphorhaltige Substrat einen Feststoffgehalt von wenigstens 30 Gew.-%, besonders bevorzugt von wenigstens 35 Gew.-%, ganz besonders bevorzugt von wenigstens 40 Gew.-%, noch bevorzugter von wenigstens 45 Gew.-%, insbesondere von wenigstens 50 Gew.-%, noch weiter bevorzugt von wenigstens 55 Gew.-% oder wenigstens 60 Gew.-%, am meisten bevorzugt von wenigstens 70 Gew.-% oder wenigstens 80 Gew.-% oder wenigstens 80 Gew.-% bis wenigstens 95 Gew.-%, jeweils bezogen auf das jeweilige Gesamtgewicht des Substrats, auf.

Vorzugsweise ist das in Schritt (a) des erfindungsgemäßen Verfahrens eingesetzte wenigstens eine phosphorstoffhaltige Substrat vorzugsweise getrockneter und/oder entwässerter Klärschlamm, insbesondere getrockneter und/oder entwässerter Rohschlamm, und/oder vorzugsweise getrocknete Gülle. Insbesondere ist das in Schritt (a) des erfindungsgemäßen Verfahrens eingesetzte wenigstens eine phosphorstoffhaltige Substrat ausgewählt aus Fasern, die aus einer Behandlung von Klärschlamm, Gülle und/oder Rückständen aus Biogasanlagen, gewonnen isoliert werden können, beispielsweise gemäß dem in WO 2015/011275 A1 offenbarten Verfahren.

### Verfahren

Die innerhalb der einzelnen Schritte des erfindungsgemäßen Verfahrens angegebenen Temperaturbereiche beziehen sich jeweils auf Normaldruck, d.h. auf einen Druck von 1013 mbar.

Die innerhalb der einzelnen Schritte des erfindungsgemäßen Verfahrens angegebenen Temperaturen und Temperaturbereiche sind jeweils Substrattemperaturen und Substrattemperaturbereiche.

Vorzugsweise ist das erfindungsgemäße Verfahren ein kontinuierliches Verfahren.

Das erfindungsgemäße Verfahren umfasst keinen Schritt, der einen Aufschluss der nach Schritt (b) erhältlichen phosphorhaltigen Asche mit wenigstens einer Säure wie einer anorganischen und/oder organischen Säure, insbesondere mit einer Mineralsäure wie Phosphorsäure und/oder Schwefelsäure vorsieht.

Schritt (a) des erfindungsgemäßen Verfahrens sieht eine Pyrolyse des wenigstens einen phosphorhaltigen Substrats bei einer Temperatur bis höchstens 800°C ohne Zufuhr von Sauerstoff unter Erhalt eines Pyrolysekokses vor. Der so erhaltene Pyrolysekoks ist somit ein festes Pyrolyseprodukt, welches nach Durchführung von Schritt (a) erhalten wird.

Vorzugsweise wird Schritt (a) bei einer Temperatur in einem Bereich von 350 °C bis höchstens 800°C, besonders bevorzugt von 350°C bis 750°C oder von 350°C bis 700°C, durchgeführt. Ganz besonders bevorzugt wird Schritt (a) bei einer Temperatur in einem Bereich von 400 bis 650°C, insbesondere bei einer Temperatur in einem Bereich von 400 bis 600°C durchgeführt.

Vorzugsweise wird Schritt (a) des erfindungsgemäßen Verfahrens über eine Dauer von wenigstens 15 Minuten, insbesondere von wenigstens 30 Minuten, durchgeführt. Vorzugsweise wird Schritt (a) des erfindungsgemäßen Verfahrens über eine Dauer von höchstens 2 h, insbesondere von wenigstens 1 h, durchgeführt. Die Dauer stellt jeweils die Verweilzeit des in Schritt (a) eingesetzten Substrats dar.

Vorzugsweise wird Schritt (a) des erfindungsgemäßen Verfahrens
(i) bei einer Temperatur in einem Bereich von 300 bis <500°C, vorzugsweise bei einer Temperatur in einem Bereich von 350°C bis <500°C, durchgeführt, wobei vorzugsweise keine Kühlung erforderlich ist und daher nicht durchgeführt wird, oder
(ii) unter vorzugsweise anschließender Kühlung bei einer Temperatur in einem Bereich von 500°C bis höchstens 800°C, vorzugsweise bei einer Temperatur in einem Bereich von 500°C bis 600°C durchgeführt.

Vorzugsweise wird Schritt (a) in einer Pyrolysekammer durchgeführt.

Vorzugsweise ist die Temperatur, bei der Schritt (a) des erfindungsgemäßen Verfahrens durchgeführt wird, geringer als die Temperatur, bei der Schritt (b) des erfindungsgemäßen Verfahrens durchgeführt wird.

Vorzugsweise wird das wenigstens eine phosphorhaltige Substrat bei Durchführung von Schritt (a) zu 15 bis 25 Gew.-% phosphorhaltigem Koks als Pyrolysekoks und zu 75 bis 85 Gew.-% Pyrolysegas umgesetzt, wobei diese Mengen sich jeweils auf die organischen Anteile des eingesetzten phosphorhaltigen Substrats beziehen.

Die während der Pyrolyse gemäß Schritt (a) entstehenden Gase oder Teile davon können einem Reformer zugeführt werden mit dem Ziel neben Wärme und/oder elektrischen Strom ein Synthesegas zu erzeugen (Reforming).

Das bei Durchführung von Schritt (a) entstehende Pyrolysegas kann beispielsweise zur Stromerzeugung in einem Reformer allo- oder autotherm (durch Zugabe von Luft(Sauerstoff) oder Wasserdampf) auf eine Temperatur in einem Bereich von >900 °C aufgeheizt und in Synthesegas umgesetzt werden. Elektrische Wirkungsgrade, bezogen auf den Energieinhalt der Pyrolysegase von bis zu 40 % oder bis zu 50 % sind dabei möglich. Hierzu kann beispielsweise auf das gestufte Reformierungsverfahren gemäß WO 01/21730 A1 zurückgegriffen werden, welches eine Feststoffpyrolyse und eine Reformierung der Pyrolysegase räumlich trennt und mittels eines Wärmeträgerkreislaufs miteinander verbindet.

Die während der Pyrolyse gemäß Schritt (a) entstehenden Gase oder Teile davon können zudem gegebenenfalls gereinigt werden, beispielsweise von darin enthaltenem Teer und/oder Ammoniak und dann zur Energieerzeugung eingesetzt werden (z.B. in Gasmotoren).

### Schritt (b)

Schritt (b) des erfindungsgemäßen Verfahrens betrifft eine Dekarbonisierung des nach Schritt (a) erhaltenen Pyrolysekokses bei einer Temperatur in einem Bereich von 300°C bis höchstens 800°C bzw. von 300°C bis <600°C unter Erhalt einer phosphorhaltigen Asche. Schritt (b) stellt somit eine im Wesentlichen vollständige, d.h. bis zu wenigstens 95%, Oxidation des eingesetzten Pyrolysekokses dar. Der gewählte Temperaturbereich gewährleistet, dass keine Versinterungsreaktionen auftreten und dass die erhältliche phosphorhaltige Asche eine ausreichende Menge an Phosphor in pflanzenverfügbarer Form enthält.

Vorzugsweise wird Schritt (b) in einer Verbrennungskammer wie einem Verbrennungsreaktor (Dekarbonisierungsreaktor) durchgeführt. Dabei kann der nach Durchführung von Schritt (a) erhältliche Pyrolysekoks zur Durchführung von Schritt (b) in eine solche Verbrennungskammer überführt werden. Vorzugsweise erfolgt die Überführung des nach Schritt (a) erhaltenen Pyrolysekokses in die Verbrennungskammer gemäß Schritt (b) dann derart, dass dem Pyrolysekoks dabei kein Sauerstoff bzw. Luftsauerstoff zugeführt wird. Alternativ können Schritt (a) und Schritt (b) aber auch in der gleichen Vorrichtung durchgeführt werden, so dass kein zwischengeschalteter Überführungsschritt notwendig ist. In diesem Fall fungiert diese Vorrichtung zur Durchführung des Schrittes (a) als Pyrolysereaktor und zur Durchführung von Schritt (b) als Verbrennungskammer.

Vorzugsweise sinkt/beträgt die Temperatur des nach Schritt (a) erhaltenen Pyrolyseprodukts vor Durchführung der Dekarbonisierung gemäß Schritt (b) auf höchstens 300°, besonders bevorzugt auf höchstens 350°C, insbesondere auf höchstens 400°C.

Vorzugsweise wird Schritt (b) des erfindungsgemäßen Verfahrens bei einer Temperatur in einem Bereich von 350°C bis höchstens 800°C, besonders bevorzugt von 400°C bis höchstens 800°C, ganz besonders bevorzugt von 400°C bis höchstens 750°C, insbesondere von 400°C bis höchstens 700°C oder von 400°C bis höchstens 650°C durchgeführt.

Besonders bevorzugt wird Schritt (b) des erfindungsgemäßen Verfahrens bei einer Temperatur in einem Bereich von 350°C bis <600°C wie in einem Bereich von 350°C bis 590° oder von 350°C bis 580°C oder von 350°C bis 570°C oder von 350°C bis 560°C oder von 350°C bis 550°C, ganz besonders bevorzugt von 400°C bis <600°C wie in einem Bereich von 400°C bis 590° oder von 400°C bis 580°C oder von 400°C bis 570°C oder von 400°C bis 560°C oder von 400°C bis 550°C durchgeführt. Insbesondere wird Schritt (b) des erfindungsgemäßen Verfahrens bei einer Temperatur in einem Bereich von 350°C bis 540°C oder von 350°C bis 530°C oder von 350°C bis 520°C oder von 350°C bis 510°C oder von 350°C bis 500°C durchgeführt, am meisten bevorzugt in einem Bereich von 350°C bis <500°C wie von 350°C bis 475°C.

Vorzugsweise wird Schritt (b) des erfindungsgemäßen Verfahrens über eine Dauer von wenigstens 15 Minuten, insbesondere von wenigstens 30 Minuten, durchgeführt. Vorzugsweise wird Schritt (b) des erfindungsgemäßen Verfahrens über eine Dauer von höchstens 2 h, insbesondere von wenigstens 1 h, durchgeführt. Die Dauer stellt jeweils die Verweilzeit des in Schritt (b) eingesetzten Substrats, d.h. des Pyrolysekokses, dar.

Schritt (b) wird unter Zufuhr von Sauerstoff bzw. Luftsauerstoff durchgeführt. Vorzugsweise wird Schritt (b) unter Zuführung von und/oder in Gegenwart von Sauerstoff bzw. Luftsauerstoff durchgeführt. Schritt (b) erfolgt somit vorzugsweise unter Regelung einer Luftzufuhr bzw. Luftsauerstoffzufuhr. Dem nach Durchführung von Schritt (a) erhaltenen Pyrolyseprodukt wird während der Durchführung des Schrittes (b) somit vorzugsweise Sauerstoff bzw. Luftsauerstoff zugeführt. Vorzugsweise erfolgt die Regelung der Luftzufuhr bzw. Luftsauerstoffzufuhr dabei mittels einer Lambda-Sonde zur Steuerung der zur Durchführung von Schritt (b) eingesetzten Menge an Sauerstoff bzw. Luftsauerstoff. Alternativ oder zusätzlich kann die die Regelung der Sauerstoffzufuhr bzw. Luftsauerstoffzufuhr dabei durch einen Mengenregler (Druckregler etc.) und/oder einen Temperaturregler erfolgen.

Schritt (b) wird vorzugsweise in einem Gegenstrom-Wanderbettreaktor durchgeführt, der wenigstens einen Feststoffauslass aufweist, über den Sauerstoff bzw. Luftsauerstoff über eine kleine Stützflamme eingeführt wird, wobei die über die Stützflamme hineintransportierte Wärme die Dekarbonisierung des nach Schritt (a) erhaltenen Pyrolyseprodukts initiiert. Die Luftmenge bzw. Luftsauerstoffmenge ist dabei vorzugsweise derart geregelt, dass sich eine Verbrennungszone dergestalt ausbildet, dass diese ortsfest den entgegenfließenden Feststoff (d.h. das entgegenfließende Pyrolysekoks) fast vollständig verbrennt.

Die während der Durchführung des Schrittes (b) erzeugte Wärme kann über den Mantel des verwendeten Gegenstrom-Wanderbettreaktors und/oder aus dem Abgas, das bei der Dekarbonisierung entsteht, ausgekoppelt werden. Die erzeugte Wärme kann zur Durchführung der Pyrolyse gemäß Schritt (a) genutzt werden. Mittels Wärmekraftmaschinen (beispielsweise Stirlingmotor, Dampfmotor, ORC (Organic Rankine Cycle), Kalina-Kreisprozess, etc.) kann an dieser Stelle optional und vorzugsweiseeine Stromerzeugung nachgeschaltet werden.

Das Abgas aus dem Dekarbonisierungsreaktor wird vorzugsweise nach Filterung einem Oxidationskatalysator zugeführt.

Vorzugsweise wird die nach Durchführung von Schritt (b) erhältliche phosphorhaltige Asche nach Durchführung von Schritt (b) und vorzugsweise nach Ausschleusung aus der Vorrichtung, in der Schritt (b) durchgeführt worden ist, gekühlt. Diese phosphorhaltige Asche kann als Düngemittel, Düngemittelzusatz und/oder zur Herstellung von Düngemitteln eingesetzt werden. Alternativ kann die phosphorhaltige Asche der Rückgewinnung des in der Asche enthaltenen Phosphors zur Verfügung dienen.

### Weitere optionale Schritte des erfindungsgemäßen Verfahrens

Vorzugsweise wird vor Schritt (a) des erfindungsgemäßen Verfahrens wenigstens ein weiterer Schritt durchgeführt, nämlich eine Trocknung des eingesetzten phosphorhaltigen Substrats, beispielsweise durch Einengen des Substrats unter Verdampfen und/oder unter Vakuum oder durch ein- oder mehrfache Filtrationsschritt(e). Alternativ und bevorzugt erfolgt dieser Trocknungsschritt durch eine Entwässerung des eingesetzten phosphorhaltigen Substrats durch Zentrifugation oder Pressen. Vorzugsweise weist das eingesetzte phosphorhaltige Substrat nach einem solchen Trocknungsschritt einen Feststoffgehalt von wenigstens 30 Gew.-%, besonders bevorzugt von wenigstens 35 Gew.-%, ganz besonders bevorzugt von wenigstens 40 Gew.-%, noch bevorzugter von wenigstens 45 Gew.-%, insbesondere von wenigstens 50 Gew.-% oder wenigstens 55 Gew.-% oder wenigstens 60 Gew.-% oder wenigstens 65 Gew.-% oder wenigstens 70 Gew.-% oder wenigstens 80 Gew.-% oder wenigstens 80 bis wenigstens 95 Gew.-%, jeweils bezogen auf das jeweilige Gesamtgewicht des Substrats, auf.

Vorzugsweise wird vor Schritt (a) des erfindungsgemäßen Verfahrens wenigstens ein weiterer Schritt durchgeführt, bei dem das eingesetzte phosphorhaltige Substrat wie in der WO 2015/011275 A1 beschrieben vorbehandelt wird:
Dabei wird das phosphorhaltige Substrat vorzugsweise
(i) durch Zugabe wenigstens einer anorganischen Base in eine wässrige Mischung mit einem pH-Wert von ≥ 8,5 überführt,
(ii) die nach Schritt (i) erhaltene wässrige Mischung mit Ultraschall behandelt, und
(iii) die nach Schritt (ii) erhaltene wässrige Mischung in eine flüssige wässrige Phase und eine disperse feststoffhaltige Mischung, die vorzugsweise Cellulose oder eine Mischung enthaltend wenigstens Cellulose und wenigstens Lignocellulose enthält, überführt.

Die Schritte (i) und (ii) werden dabei vorzugsweise bei einer Temperatur <100°C durchgeführt. Die Behandlung mit Ultraschall in Schritt (ii) erfolgt vorzugsweise in einer oder in mehreren Behandlungsphase(n). Dabei liegt die Dauer, d.h. die Verweilzeit, einer Behandlungsphase vorzugsweise im Bereich von 0,2 bis 60 Sekunden. Vorzugsweise wird jede Behandlungsphase bei einer Sonotroden-Frequenz in einem Bereich von 14 bis 22 kHz durchgeführt.

Die nach Schritt (iii) erhältliche disperse, feststoffhaltige Mischung wird dann als phosphorhaltiges Substrat in Schritt (a) des erfindungsgemäßen Verfahrens eingesetzt. Optional kann diese nach Schritt (iii) erhältliche disperse, feststoffhaltige Mischung vor Einsatz als phosphorhaltiges Substrat in Schritt (a) zudem wie vorstehend beschrieben einem Trocknungsschritt unterworfen werden.

Die disperse, feststoffhaltige Mischung, die als phosphorhaltiges Substrat in Schritt (a) des erfindungsgemäßen Verfahrens eingesetzt wird, weist vorzugsweise einen Feststoffgehalt von wenigstens 30 Gew.-%, besonders bevorzugt von wenigstens 35 Gew.-%, ganz besonders bevorzugt von wenigstens 40 Gew.-%, noch bevorzugter von wenigstens 45 Gew.-%, insbesondere von wenigstens 50 Gew.-% oder wenigstens 55 Gew.-% oder wenigstens 60 Gew.-% oder wenigstens 65 Gew.-% oder wenigstens 70 Gew.-%, jeweils bezogen auf das jeweilige Gesamtgewicht der dispersen, feststoffhaltigen Mischung auf.

Durch die in der WO 2015/011275 A1 beschriebe Vorbehandlung umfassend die vorstehend genannten Schritt (i) bis (iii) wird insbesondere vorteilhafterweise bewirkt, dass die in dem in Schritt (i) eingesetzten phosphorhaltigen Substrat enthaltene disperse, feststoffhaltige Mischung, die nach Schritt (iii) erhalten wird und die in Schritt (a) des erfindungsgemäßen Verfahrens eingesetzt werden kann, von den ebenfalls darin enthaltenen, in hochviskoser, zähflüssiger, d.h. gelartiger Form vorliegenden Komponenten wie Glykosaminoglykanen (GAG) und/oder Mucopolysacchariden getrennt werden kann. Dieses durch diese Komponenten gebildete Gel wird durch die Schritte (i) bis (iii) in Lösung gebracht, was eine erleichterte Abtrennung der dispersen, feststoffhaltigen Mischung ermöglicht, welche den Großteil der im in Schritt (i) eingesetzten phosphorhaltigen Substrat enthaltenen Phosphorverbindungen enthält. Die disperse, feststoffhaltige Mischung kann dann ohne Ausfaulung und Flockungsmitteleinsatz durch Belüftung biologisch (aerob) getrocknet werden. Weitere Feuchte kann gegebenenfalls mittels thermischer Energie entfernt werden.

### Phosphorhaltige Asche

Mittels des erfindungsgemäßen Verfahrens wird nach Durchführung von Schritt (b) phosphorhaltige Asche erhalten. Diese kann als Düngemittel, Düngemittelzusatz und/oder zur Herstellung von Düngemitteln eingesetzt werden.

Vorzugsweise liegen wenigstens 60 Gew.-% oder wenigstens 65 Gew.-% oder wenigstens 75 Gew.-% oder wenigstens 85 Gew.-%, besonders bevorzugt wenigstens 87,5 Gew.-%, ganz besonders bevorzugt wenigstens 90 Gew.-%, der Gesamtmenge an Phosphor, die in der nach Durchführung von Schritt (b) erhaltenen phosphorhaltigen Asche enthalten ist, in pflanzenverfügbarer Form innerhalb dieser Asche vor. Der Begriff "pflanzenverfügbar" in Zusammenhang mit der Gesamtmenge an Phosphor in der nach Durchführung von Schritt (b) erhaltenen phosphorhaltigen Asche ist dem Fachmann bekannt. Diese pflanzenverfügbare Menge entspricht derjenigen Menge an Phosphor, die in einer wässrigen 2%-igen Zitronensäurelösung löslich ist und mittels des photometrischen Verfahrens gemäß DIN EN ISO 6878 (Datum: September 2004) bestimmbar ist. Diese Bestimmungsmethode ist nachstehend beschrieben.

Vorzugsweise enthält die nach Durchführung von Schritt (b) erhaltene phosphorhaltige Asche wenigstens 1,0 Gew.-%, besonders bevorzugt wenigstens 1,5 Gew.-%, ganz besonders bevorzugt wenigstens 2,0 Gew.-% an Phosphor, berechnet als atomarer Phosphor, bezogen auf ihr Gesamtgewicht. Vorzugsweise enthält die nach Durchführung von Schritt (b) erhaltene phosphorhaltige Asche wenigstens 1,5 Gew.-%, besonders bevorzugt wenigstens 2,0 Gew.-%, ganz besonders bevorzugt wenigstens 2,5 Gew.-% an Phosphor, berechnet als P₂O₅, bezogen auf ihr Gesamtgewicht. Die Bestimmungsmethode zur Bestimmung der Gesamtmenge an Phosphor ist nachstehend beschrieben.

Die Asche, welche nach Durchführung von Schritt (b) des erfindungsgemäßen Verfahrens erhältlich ist, enthält somit solche Mengen an Phosphor, insbesondere in pflanzenverfügbarer Form, dass die Asche insbesondere als Düngemittel(zusatz) oder zur Herstellung von Düngemitteln eingesetzt werden kann.

Ein zweiter Gegenstand der vorliegenden Erfindung ist daher phosphorhaltige Asche, welche erhältlich ist nach dem erfindungsgemäßen Verfahren, d.h. gemäß dem ersten Gegenstand der vorliegenden Erfindung und die im Zusammenhang mit diesem ersten Gegenstand in der Beschreibung offenbarten bevorzugten Ausführungsformen.

### Düngemittel

Die erfindungsgemäße phosphorhaltige Asche, die nach Schritt (b) des erfindungsgemäßen Verfahrens erhältlich ist, eignet sich als Düngemittel oder Düngemittelzusatz und/oder zur Herstellung von Düngemitteln.

Ein weiterer Gegenstand der vorliegenden Erfindung ist daher ein Düngemittel oder ein Düngemittelzusatz enthaltend wenigstens die erfindungsgemäße phosphorhaltige Asche.

### Verwendung

Die erfindungsgemäße phosphorhaltige Asche eignet sich als Düngemittel oder Düngemittelzusatz und/oder zur Herstellung von Düngemitteln.

Ein weiterer Gegenstand der vorliegenden Erfindung ist eine Verwendung der erfindungsgemäßen phosphorhaltigen Asche als Düngemittel oder Düngemittelzusatz und/oder zur Herstellung von Düngemitteln.

### Bestimmungsmethoden

### 1. Bestimmung der Gesamtmenge an Phosphor

Die Gesamtmenge an Phosphor in der nach Durchführung von Schritt (b) erhaltenen phosphorhaltigen Asche wird mittels induktiv-gekoppelter Plasma-Atom-Emissionsspektrometrie (ICP-OES) gemäß DIN EN ISO 11885 (Datum: September 2009) bestimmt. Zunächst wird eine Probe der phosphorhaltigen Asche einem Königswasseraufschluss gemäß DIN 38414-S7 (Datum: Januar 1983) unterworfen. Die Menge an Phosphor, die in der diesem Aufschluss unterworfenen Probe enthalten ist, wird im Anschluss mittels induktiv-gekoppelter Plasma-Atom-Emissionsspektrometrie (ICP-OES) gemäß DIN EN ISO 11885 (Datum: September 2009) bestimmt. Die Probe wird dabei in einem durch ein Hochfrequenzfeld erzeugtes Argonplasma thermisch angeregt und das aufgrund von Elektronenübergängen emittierte Licht als Spektrallinie der entsprechenden Wellenlänge sichtbar und mit einem optischen System analysiert. Dabei besteht eine lineare Beziehung zwischen der Intensität des emittierten Lichtes und der Gegenwart bzw. Konzentration des entsprechenden Elements wie Phosphor. Vor Durchführung der Untersuchung werden anhand von bekannten Elementstandards (Referenzstandards), die in Abhängigkeit von der jeweiligen zu untersuchenden Probe Kalibrierungsmessungen durchgeführt. Anhand dieser Kalibrierungen kann die Gegenwart von Phosphor in der Probe bestimmt und quantifiziert werden. Die Gesamtmenge an Phosphor kann als atomarer Phosphor oder berechnet als P₂O₅ angegeben werden.

### 2. Bestimmung des pflanzenverfügbaren Anteils an Phosphor

Die Bestimmung erfolgt durch Bestimmung des Anteils an citronensäurelöslichen Phosphorverbindungen in der nach Durchführung von Schritt (b) erhaltenen phosphorhaltigen Asche mittels des photometrischen Verfahrens gemäß DIN EN ISO 6878 (Datum: September 2004; darin gemäß Abschnitt 4).

Zunächst werden 20 g Citronensäure-1-Hydrat in 1 l deionisiertem Wasser bei 23°C gelöst und die so erhaltene 2%-ige Citronensäurelösung nach ihrer Herstellung vor dem weiteren Einsatz 30 Minuten bei 23°C gelagert. Die zu untersuchende Probe der phosphorhaltigen Asche wird soweit zerkleinert, dass mindestens 80 Gew.-% davon ein Sieb mit einer Maschenweite von 0,315 mm passieren können. 2,5 g dieser so erhaltenen gesiebten Asche werden auf 0,001 g genau in einem trockenen 250 ml-Messkolben eingewogen und 250 ml der vorstehend genannten 2%-igen Citronensäurelösung hinzugegeben, wobei darauf zu achten ist, dass sich innerhalb der Probe keine Klumpen bilden. Der Kolben wird mit einem Gummistopfen verschlossen und mit einer Rotationsschüttelmaschine über eine Dauer von 30 Minuten bei 23°C geschüttelt. Die in dem Kolben enthaltene Suspension wird dann durch einen Membranfilter (Durchmesser 50 mm, Porenweite 5 µm) (beispielsweise dem Filter Sartorius SM 11342) mittels Vakuum filtriert, wobei die ersten 10 ml des Filtrats verworfen werden.

Nach Filtration des gesamten Extraktes wird die in dem Filtrat enthaltene Menge an gelöstem Phosphor mittels des photometrischen Verfahrens gemäß DIN EN ISO 6878, Abschnitt 4 (Datum: September 2004) bestimmt. Die bestimmte Menge an Phosphor kann als atomarer Phosphor oder berechnet als P₂O₅ angegeben werden.

Die nachfolgenden Beispiele und Vergleichsbeispiele dienen der Erläuterung der Erfindung, sind jedoch nicht einschränkend auszulegen.

### Beispiele und Vergleichsbeispiele

### Beispiele 1a und 1b (jeweils erfindungsgemäß*) sowie Vergleichsbeispiele 1c, 1d und 1e (jeweils nicht erfindungsgemäß).

Die Beispiele 1a und 1b (jeweils erfindungsgemäß*) sowie die Vergleichsbeispiele 1c, 1d und 1e (jeweils nicht erfindungsgemäß) unterscheiden sich jeweils in der Durchführung des Schrittes (b). In allen den Beispielen 1a und 1b sowie den Vergleichsbeispielen 1c, 1d und 1e zugrundeliegenden Verfahren wurde jeweils das nachstehend beschriebene Substrat eingesetzt und dieses im ebenfalls nachstehend beschriebenen Pyrolyseschritt (a) eingesetzt. Der jeweils erhaltene Pyrolysekoks wurde dann jeweils einer Dekarbonisierung gemäß Schritt (b) unterworfen.
*: Beispiel 1a ist erfindungsgemäß. Beispiel 1b ist ein Vergleichsbeispiel in Bezug auf das beanspruchte Verfahren, jedoch erfindungsgemäß in Bezug auf das mittels des beanspruchten Verfahrens erhältliche Produkt

### Substrat

1 m³ Klärschlamm (enthaltend 5 Gew.-% Feststoffe gemäß EN 12880 über Ermittlung des Trockenrückstands) wird zunächst mittels des in WO 2015/011275 A1 beschriebenen Verfahrens vorbehandelt: Zunächst wird mittels NaOH ein pH-Wert von 10 eingestellt. Anschließend erfolgt eine Ultraschallbehandlung mittels eines Hochleistungsultraschallgeräts der Firma Bsonic GmbH (Halver, Deutschland). Nach der Ultraschallbehandlung wird eine disperse Mischung (ca. 100 kg) enthaltend Cellulose von der flüssigen wässrigen Phase der nach der Ultraschallbehandlung erhaltenen wässrigen Mischung mittels eines Dekanters abgetrennt. Die disperse Mischung enthält ca. 82 Gew.-% Wasser, bezogen auf das Gesamtgewicht der dispersen Mischung). Die Mischung wird getrocknet, bis sie einen Feststoffgehalt von ca. 35 Gew.-% aufweist. Die resultierende Mischung wird dann als Substrat im nachfolgend beschriebenen Verfahren eingesetzt.

### Schritt (a)

Die vorstehend beschriebene Mischung wird bei einer Substrattemperatur von 450°C für die Dauer von einer Stunde einer Pyrolyse unterworfen, wobei ein Pyrolysekoks erhalten wird.

### Schritt (b)

Nach Beenden der Pyrolyse gemäß Schritt (a) wurde Sauerstoff zugeführt. Dieser wurde so zugeführt, dass die Temperatur des nach Schritt (a) erhaltenen Pyrolysekokses nicht unterhalb von 400°C absank. Nun erfolgte eine Dekarbonisierung des Pyrolysekokses unter weiterer Zufuhr von Sauerstoff bei 450°C für die Dauer von einer Stunde (Beispiel 1a), einer weiteren Stunde bei 800°C (Beispiel 1b) oder weiteren 20 Minuten bei 950°C (Vergleichsbeispiel 1c) oder einer weiteren Stunde bei 900°C (Vergleichsbeispiel 1d) oder weiteren 20 Minuten bei 1000°C (Vergleichsbeispiel 1e). Die genauen jeweiligen Bedingungen sind in der nachfolgenden Tabelle 1 zusammengefasst.

Die Gesamtmengen an Phosphor, berechnet als P₂O₅, in den jeweils erhaltenen Aschen betragen ca. 25 000 mg/kg (2,5 Gew.-% bezogen auf das Gesamtgewicht der phosphorhaltigen Asche). Die Bestimmung erfolgt mittels der vorstehend beschriebenen Methode anhand von Beispiel 1a.

Aus nachstehender Tabelle 1 ist ersichtlich, dass nach Durchführung des Pyrolyseschrittes (a) nur ein Dekarbonisierungsschritt (b), der bei einer Temperatur bis höchstens 800°C durchgeführt wird, gewährleistet, dass in der nach Schritt (b) erhaltenen phosphorhaltigen Asche eine ausreichende Menge an Phosphor in pflanzenverfügbarer Form vorhanden ist.

**Tabelle 1:**

| *Beispiel*/ *Vergleichsbeispiel* | *Schritt (a) (Pyrolyse)* | *Schritt (b) (Dekarbonisierung)* | *Anteil an pflanzenverfügbarem Phosphor in der nach Schritt (b) erhaltenen phosphorhaltigen Asche, berechnet als P₂O₅ [mg*/*kg Asche]* | *Anteil an pflanzenverfügbarem Phosphor in der nach Schritt (b) erhaltenen phosphorhaltigen Asche, bezogen auf die Gesamtmenge an Phosphor, berechnet als P₂O₅ [Gew.-%]* |
|---|---|---|---|---|
| Beispiel 1a | 1 h bei 450°C | 1 h bei 450°C | 23 700 | 94,8 |
| Beispiel 1b | 1 h bei 450°C | 1 h bei 450°C, dann 1 h bei 800°C | 23 700 | 94,8 |
| Vergleichsbeispiel 1c | 1 h bei 450°C | 1 h bei 450°C, dann 20 Min. bei 950°C | 17 300 | 69,2 |
| Vergleichsbeispiel 1d | 1 h bei 450°C | 1 h bei 450°C, dann 1 h bei 900°C | 14 900 | 59,6 |
| Vergleichsbeispiel 1e | 1 h bei 450°C | 1 h bei 450°C, dann 1 h bei 1000°C | 12 400 | 49,6 |

### Beispiel 2a (erfindungsgemäß) und Vergleichsbeispiel 2b (nicht erfindungsgemäß)

Das Beispiel 2a (erfindungsgemäß) sowie das Vergleichsbeispiel 2b (nicht erfindungsgemäß) unterscheiden sich in der Durchführung des Schrittes (b). Es wurde jeweils das nachstehend beschriebene Substrat eingesetzt und dieses im ebenfalls nachstehend beschriebenen Pyrolyseschritt (a) eingesetzt. Der jeweils erhaltene Pyrolysekoks wurde dann jeweils einer Dekarbonisierung gemäß Schritt (b) unterworfen.

### Substrat

1 m³ Klärschlamm (enthaltend 6 Gew.-% Feststoffe gemäß EN 12880 über Ermittlung des Trockenrückstands) wird zunächst mittels des in WO 2015/011275 A1 beschriebenen Verfahrens vorbehandelt: Zunächst wird mittels NaOH ein pH-Wert von 10 eingestellt. Anschließend erfolgt eine Ultraschallbehandlung mittels eines Hochleistungsultraschallgeräts der Firma Bsonic GmbH (Halver, Deutschland). Nach der Ultraschallbehandlung wird eine disperse Mischung (ca. 100 kg) enthaltend Cellulose von der flüssigen wässrigen Phase der nach der Ultraschallbehandlung erhaltenen wässrigen Mischung mittels eines Dekanters abgetrennt. Die disperse Mischung enthält ca. 70 Gew.-% Wasser, bezogen auf das Gesamtgewicht der dispersen Mischung). Die Mischung wird getrocknet, bis sie einen Feststoffgehalt von ca. 80 Gew.-% aufweist. Die resultierende Mischung wird dann als Substrat im nachfolgend beschriebenen Verfahren eingesetzt.

### Schritt (a)

Die vorstehend beschriebene Mischung wird bei einer Substrattemperatur von 500°C für die Dauer von einer Stunde einer Pyrolyse unterworfen, wobei ein Pyrolysekoks erhalten wird.

### Schritt (b)

Nach Beenden der Pyrolyse gemäß Schritt (a) wurde Sauerstoff zugeführt. Dieser wurde so zugeführt, dass die Temperatur des nach Schritt (a) erhaltenen Pyrolysekokses nicht unterhalb von 400°C absank. Nun erfolgte eine Dekarbonisierung des Pyrolysekokses unter weiterer Zufuhr von Sauerstoff bei 450°C für die Dauer von einer Stunde (Beispiel 2a) und weiteren zwei Stunden bei 1000°C (Beispiel 2b). Die genauen jeweiligen Bedingungen sind der nachfolgenden Tabelle 2 zusammengefasst.

Die Gesamtmengen an Phosphor, berechnet als P₂O₅, in den jeweils erhaltenen Aschen betragen ca. 45 800 mg/kg (4,58 Gew.-% bezogen auf das Gesamtgewicht der phosphorhaltigen Asche). Die Bestimmung erfolgt mittels der vorstehend beschriebenen Methode anhand von Beispiel 2a.

Aus nachstehender Tabelle 2 ist ersichtlich, dass nach Durchführung des Pyrolyseschrittes (a) nur ein Dekarbonisierungsschritt (b), der bei einer Temperatur bis höchstens 800°C durchgeführt wird, gewährleistet, dass in der nach Schritt (b) erhaltenen phosphorhaltigen Asche eine ausreichende Menge an Phosphor in pflanzenverfügbarer Form vorhanden ist.

**Tabelle 2:**

| *Beispiel*/ *Vergleichsbeispiel* | *Schritt (a) (Pyrolyse)* | *Schritt (b) (Dekarbonisierung)* | *Anteil an pflanzenverfügbarem Phosphor in der nach Schritt (b) erhaltenen phosphorhaltigen Asche, berechnet als P₂O₅ [mg*/*kg Asche)* | *Anteil an pflanzenverfügbarem Phosphor in der nach Schritt (b) erhaltenen phosphorhaltigen Asche, bezogen auf die Gesamtmenge an Phosphor, berechnet als P₂O₅ [Gew.-%]* |
|---|---|---|---|---|
| Beispiel 2a | 1 h bei 500°C | 1 h bei 450°C | 34 400 | 75,1 |
| Vergleichsbeispiel 2b | 1 h bei 500°C | 1 h bei 450°C, dann 2 h bei 1000°C | 11 400 | 24,9 |

## Patentansprüche

1. Ein Verfahren zur Herstellung von phosphorhaltiger Asche aus wenigstens einem phosphorhaltigen Substrat ausgewählt aus der Gruppe bestehend aus phosphorhaltiger Biomasse umfassend wenigstens die Schritte (a) und (b), nämlich
(a) Pyrolyse des wenigstens einen phosphorhaltigen Substrats bei einer Temperatur bis höchstens 800°C ohne Zufuhr von Sauerstoff unter Erhalt eines Pyrolysekokses, und
(b) Dekarbonisierung des nach Schritt (a) erhaltenen Pyrolysekokses unter Zufuhr von Sauerstoff bei einer Temperatur in einem Bereich von 300°C bis <600°C unter Erhalt einer phosphorhaltigen Asche,
wobei das Verfahren keinen Schritt beinhaltet, der einen Aufschluss der nach Schritt (b) erhältlichen phosphorhaltigen Asche mit wenigstens einer Säure vorsieht.

2. Das Verfahren gemäß Anspruch 1, **dadurch gekennzeichnet, dass** das eingesetzte phosphorhaltige Substrat einen Feststoffgehalt von wenigstens 30 Gew.-% aufweist, bezogen auf das Gesamtgewicht des Substrats.

3. Das Verfahren gemäß Anspruch 1 oder 2, **dadurch gekennzeichnet, dass** die nach Durchführung von Schritt (b) erhaltene phosphorhaltige Asche wenigstens 1 Gew.-% an Phosphor, berechnet als atomares Phosphor, bezogen auf ihr Gesamtgewicht, enthält.

4. Das Verfahren gemäß einem der vorstehenden Ansprüche, **dadurch gekennzeichnet, dass** wenigstens 65 Gew.-% der Gesamtmenge an Phosphor, die in der nach Durchführung von Schritt (b) erhaltenen phosphorhaltigen Asche enthalten ist, in pflanzenverfügbarer Form innerhalb dieser Asche vorliegen, wobei diese pflanzenverfügbare Menge derjenigen Menge an Phosphor entspricht, die in einer wässrigen 2%-igen Zitronensäurelösung löslich ist und mittels Photometrie gemäß DIN EN ISO 6878 (Datum: September 2004) bestimmbar ist.

5. Das Verfahren gemäß einem der vorstehenden Ansprüche, **dadurch gekennzeichnet, dass** das in Schritt (a) des Verfahrens eingesetzte wenigstens eine phosphorhaltige Substrat ausgewählt ist aus der Gruppe bestehend aus Klärschlamm, Gülle, Rückständen aus Biogasanlagen und Mischungen davon.

6. Das Verfahren gemäß einem der vorstehenden Ansprüche, **dadurch gekennzeichnet, dass** Schritt (a) bei einer Temperatur in einem Bereich von 400°C bis höchstens 600°C durchgeführt wird.

7. Das Verfahren gemäß einem der vorstehenden Ansprüche, **dadurch gekennzeichnet, dass** Schritt (a) über eine Dauer von höchstens einer Stunde durchgeführt wird.

8. Das Verfahren gemäß einem der vorstehenden Ansprüche, **dadurch gekennzeichnet, dass** die Temperatur des nach Schritt (a) erhaltenen Pyrolysekokses vor Durchführung der Dekarbonisierung gemäß Schritt (b) auf höchstens 300°C absinkt bzw. vor Durchführung der Dekarbonisierung gemäß Schritt (b) wenigstens 300°C beträgt.

9. Das Verfahren gemäß einem der vorstehenden Ansprüche, **dadurch gekennzeichnet, dass** Schritt (b) bei einer Temperatur in einem Bereich von 350°C bis 590°C durchgeführt wird.

10. Das Verfahren gemäß einem der vorstehenden Ansprüche, **dadurch gekennzeichnet, dass** Schritt (b) über eine Dauer von höchstens zwei Stunden durchgeführt wird.

11. Das Verfahren gemäß einem der vorstehenden Ansprüche, **dadurch gekennzeichnet, dass** vor Durchführung von Schritt (a) das wenigstens eine phosphorhaltige Substrat
(i) durch Zugabe wenigstens einer anorganischen Base in eine wässrige Mischung mit einem pH-Wert von ≥ 8,5 überführt wird,
(ii) die nach Schritt (i) erhaltene wässrige Mischung mit Ultraschall behandelt wird, und
(iii) die nach Schritt (ii) erhaltene wässrige Mischung in eine flüssige wässrige Phase und eine disperse feststoffhaltige Mischung überführt wird und die so erhaltene disperse, feststoffhaltige Mischung als phosphorhaltiges Substrat in Schritt (a) eingesetzt wird.

12. Phosphorhaltige Asche erhältlich nach dem Verfahren gemäß einem der Ansprüche 1 bis 11.

13. Eine Verwendung der phosphorhaltigen Asche gemäß Anspruch 12 als Düngemittel oder Düngemittelzusatz und/oder zur Herstellung von Düngemitteln.

14. Düngemittel umfassend wenigstens phosphorhaltige Asche gemäß Anspruch 12.

## Claims

1. A process for producing phosphorus-containing ash from at least one phosphorus-containing substrate selected from the group consisting of phosphorus-containing biomass, comprising at least the following steps (a) and (b), that is,
(a) pyrolysis of the at least one phosphorus-containing substrate at a temperature of up to at most 800 °C without supply of oxygen, thereby obtaining a pyrolysis coke, and
(b) decarbonization of the pyrolysis coke obtained after step (a) under supply of oxygen at a temperature in a range from 300 °C to < 600 °C, thereby obtaining a phosphorus-containing ash,
wherein the process does not include a step which provides for digestion of the phosphorus-containing ash obtained after step (b) with at least one acid.

2. The process according to claim 1, **characterized in that** the phosphorus-containing substrate employed has a solids content of at least 30% by weight, based on the total weight of the substrate.

3. The process according to claim 1 or 2, **characterized in that** the phosphorus-containing ash obtained after carrying out step (b) contains at least 1% by weight of phosphorus, calculated as atomic phosphorus, based on its total weight.

4. The process according to any one of the preceding claims, **characterized in that** at least 65% by weight of the total amount of phosphorus contained in the phosphorus-containing ash obtained after carrying out step (b) is present in a plant-available form within said ash, whereby said plant-available quantity corresponds to the quantity of phosphorus that is soluble in an aqueous 2% solution of citric acid and can be determined by photometry in accordance with DIN EN ISO 6878 (date: September 2004).

5. The process according to any one of the preceding claims,
**characterized in that** the at least one phosphorus-containing substrate employed in step (a) of the process is selected from the group consisting of sewage sludge, liquid manure, residues from biogas plants and mixtures thereof.

6. The process according to any one of the preceding claims,
**characterized in that** step (a) is carried out at a temperature in a range from 400 °C to at most 600 °C.

7. The process according to any one of the preceding claims,
**characterized in that** step (a) is carried out for a duration of at most one hour.

8. The process according to any one of the preceding claims,
**characterized in that** the temperature of the pyrolysis coke obtained after step (a) drops to at most 300 °C before carrying out the decarbonization according to step (b) or is at least 300 °C before carrying out the decarbonization according to step (b).

9. The process according to any one of the preceding claims,
**characterized in that** step (b) is carried out at a temperature in a range from 350 °C to 590 °C.

10. The process according to any one of the preceding claims,
**characterized in that** step (b) is carried out for a duration of at most two hours.

11. The process according to any one of the preceding claims, **characterized in that,** before carrying out step (a), the at least one phosphorus-containing substrate
(i) is converted into an aqueous mixture with a pH of ≥ 8.5 by the addition of at least one inorganic base,
(ii) the aqueous mixture obtained after step (i) is treated with ultrasound, and
(iii) the aqueous mixture obtained after step (ii) is converted into a liquid aqueous phase and a disperse solid-containing mixture and the disperse solid-containing mixture thus obtained is used as a phosphorus-containing substrate in step (a).

12. A phosphorus-containing ash obtainable by the process according to any one of claims 1 to 11.

13. A use of the phosphorus-containing ash according to claim 12 as a fertilizer or fertilizer additive and/or for the production of fertilizers.

14. A fertilizer comprising at least phosphorus-containing ash according to claim 12.

## Revendications

1. Procédé de production de cendres contenant du phosphore à partir d'au moins un substrat contenant du phosphore choisi dans le groupe constitué par biomasse contenant du phosphore, comprenant au moins les étapes (a) et (b), à savoir
(a) la pyrolyse dudit au moins un substrat contenant du phosphore, à une température allant jusqu'à 800 °C au maximum, sans apport d'oxygène, en obtenant un coke de pyrolyse, et
(b) la décarbonisation du coke de pyrolyse obtenu après l'étape (a) avec apport d'oxygène, à une température dans une plage de 300 °C à < 600 °C, en obtenant une cendre contenant du phosphore,
le procédé ne comprenant pas d'étape consistant à soumettre les cendres contenant du phosphore obtenues après l'étape (b) à une digestion avec au moins un acide.

2. Procédé selon la revendication 1, **caractérisé en ce que** le substrat contenant du phosphore utilisé présente une teneur en matières solides d'au moins 30 % en poids, par rapport au poids total du substrat.

3. Procédé selon la revendication 1 ou 2, **caractérisé en ce que** les cendres contenant du phosphore obtenues après la mise en oeuvre de l'étape (b) contiennent au moins 1 % en poids de phosphore, calculé en phosphore atomique, par rapport à leur poids total.

4. Procédé selon l'une quelconque des revendications précédentes, **caractérisé en ce qu'**au moins 65 % en poids de la quantité totale de phosphore contenue dans les cendres contenant du phosphore obtenues après la mise en oeuvre de l'étape (b) sont présents sous forme accessible aux plantes au sein desdites cendres, cette quantité accessible aux plantes correspondant à la quantité de phosphore qui est soluble dans une solution aqueuse d'acide citrique à 2 % et qui peut être déterminée par photométrie selon la norme DIN EN ISO 6878 (date : septembre 2004).

5. Procédé selon l'une quelconque des revendications précédentes, **caractérisé en ce que** le au moins un substrat contenant du phosphore utilisé dans l'étape (a) du procédé est choisi dans le groupe constitué par les boues d'épuration, le lisier, les résidus d'installations de biogaz et leurs mélanges.

6. Procédé selon l'une quelconque des revendications précédentes, **caractérisé en ce que** l'étape (a) est mise en oeuvre à une température comprise dans une rangée allant de 400 °C à 600 °C au plus.

7. Procédé selon l'une quelconque des revendications précédentes, **caractérisé en ce que** l'étape (a) est mise en oeuvre sur une durée d'au plus une heure.

8. Procédé selon l'une quelconque des revendications précédentes, **caractérisé en ce que** la température du coke de pyrolyse obtenu après l'étape (a) s'abaisse au plus jusqu'à 300 °C avant la mise en oeuvre de la décarbonisation selon l'étape (b) ou est d'au moins 300 °C avant la mise en oeuvre de la décarbonisation selon l'étape (b).

9. Procédé selon l'une quelconque des revendications précédentes, **caractérisé en ce que** l'étape (b) est mise en oeuvre à une température comprise dans une rangée allant de 350 °C à 590 °C.

10. Procédé selon l'une quelconque des revendications précédentes, **caractérisé en ce que** l'étape (b) est mise en oeuvre sur une durée d'au plus deux heures.

11. Procédé selon l'une quelconque des revendications précédentes, **caractérisé en ce que,** avant la mise en oeuvre de l'étape (a), le au moins un substrat contenant du phosphore
(i) est transformé en un mélange aqueux ayant un pH de ≥ 8,5 par addition d'au moins une base inorganique,
(ii) le mélange aqueux obtenu après l'étape (i) est traité par ultrasons, et
(iii) le mélange aqueux obtenu après l'étape (ii) est transformé en une phase aqueuse liquide et en un mélange dispersé contenant des matières solides, et le mélange dispersé contenant des matières solides ainsi obtenu est utilisé comme substrat contenant du phosphore dans l'étape (a).

12. Cendres contenant du phosphore pouvant être obtenues par le procédé selon l'une quelconque des revendications 1 à 11.

13. Utilisation des cendres contenant du phosphore selon la revendication 12 en tant qu'engrais ou additif d'engrais et/ou pour la production d'engrais.

14. Engrais comprenant au moins des cendres contenant du phosphore selon la revendication 12.
